Europäisches Patentamt

European Patent Office

Office européen des brevets

(19)

(11) Publication number: **0 016 655**
**B1**

(12) # EUROPEAN PATENT SPECIFICATION

(45) Date of publication of patent specification: **08.06.83**

(51) Int. Cl.³: **B 23 G 5/04**

(21) Application number: **80300905.9**

(22) Date of filing: **21.03.80**

(54) Improvements in or relating to screwing dies.

(30) Priority: **22.03.79 GB 7910200**

(43) Date of publication of application:
**01.10.80 Bulletin 80/20**

(45) Publication of the grant of the patent:
**08.06.83 Bulletin 83/23**

(84) Designated Contracting States:
**DE FR IT SE**

(56) References cited:
**FR - E - 59 951**
**GB - A - 558 580**
**US - A - 1 488 271**
**US - A - 1 893 688**
**US - A - 2 028 438**
**US - A - 2 502 854**
**US - A - 3 125 772**

(73) Proprietor: **The Secretary of State for Industry in Her Britannic Majesty's Government of the United Kingdom of Great Britain and Northern Ireland 1 Victoria Street London SW1H 0ET (GB)**

(72) Inventor: **Greeves, Colin Stuart 40 Glen Grove East Kilbride Glasgow, Scotland (GB)**

(74) Representative: **Wildman, David Brian et al, Procurement Executive Ministry of Defence Patents 1A4, Room 1932 (19th Floor) Empress State Building Lillie Road London SW6 1TR (GB)**

Improvements in or relating to screwing dies

This invention relates to screwing dies, and to a novel form of blank from which such dies may be produced.

A known form of screwing die comprises a cylinder having an axial threaded bore therethrough upon which bore the cutting threads are formed. In this form of die, a plurality of similar circular holes are drilled parallel to the threaded bore, these holes being of such a diameter, and so positioned with their centres equidistant from the threaded bore, that these bores "overlap" (i.e. form openings into) the threaded bore. At an edge of each opening so formed, there is thus created a cutting edge whose rake angle is determined by the diameter and positioning of the holes relative to the threaded bore. Between these openings there remain lands upon which the cutting threads are disposed, the cutting edge being the leading edge of each land.

For efficient cutting, the rake angle should normally have the same value irrespective of the diameter of thread to be cut. Ideally this will be in the approximate range 10° to 11°, at least at the leading end of the die where cutting commences, although values as low as 5° or as great as 15° can provide acceptable results.

The choice of land dimensions will depend upon the diameter of the thread to be cut, and ideally will strike the optimum compromise between the ability of the die to resist breakage during use, and the provision of openings of adequate size to permit all waste material produced during cutting to be cleared through the openings without fouling the newly cut thread. The ideal relationship between thread diameter and land dimension is determined empirically, and data providing details of such relationships for a variety of thread diameters will be familiar to those skilled in the art. Normally the land area will account for about 35—45% of the circumference of the threaded bore, although values down to 30% can give acceptable results.

US Patent No. 1,488,271 discloses a hexagonal die which has four circular apertures surrounding a centrally positioned threaded bore. A slit extends from one aperture to the edge of the die and may be opened or closed by the adjustment of a small screw. In this way a very small adjustment may be made to the size of the threaded bore.

A disadvantage of the known form of die described above is that each predetermined size and configuration of axial apertures is suitable for only a limited range of thread diameters. The present invention seeks to make possible the provision of a single die blank from which dies for cutting various thread diameters and forms can be made simply by the formation therein of an appropriate threaded bore.

According to the present invention, a blank for a screwing die has a longitudinal axis on which is to be formed a bore having a screw-cutting thread on its surface, and one or more shaped cavities extending through the blank in a generally longitudinal sense, the shape and disposition of the shaped cavities being such that for each of a range of sizes of the bore one or more openings are formed through which the bore communicates with the remainder of the said one or more shaped cavities, said remainder being flanked by one or more land portions of the blank which carry the screw-cutting threads, characterised in that the shaped cavities are of non-circular form such that over a substantial proportion of the said range,

i) in at least one plane transverse to the longitudinal axis, a cutting edge having a positive rake angle of between about 5° and 15° is formed on the leading edge of each land portion, and

ii) in the said at least one plane the land portions form in total between about 30 and 45% of the bore circumference with the said openings forming the remainder of the circumference.

Normally the said at least one plane will be that of an end face of the die blank.

The said positive rake angle should preferably be between about 10° and 11°.

The land portions should preferably form in total between about 35 and 45% of the bore circumference.

Preferably there will be a plurality of mutually separate shaped cavities. A plurality of shaped cavities conceivably might be linked in a zone around the longitudinal axis to form a single cavity. The latter arrangement might, however, lead to difficulty in forming a bore by drilling or a similar method.

Preferably each of the shaped cavities is of similar form.

Preferably the shaped cavities are symmetrically disposed with reference to the longitudinal axis.

In one advantageous arrangement, each shaped cavity has an edge in the said at least one plane in the form of an Archimedes spiral having its origin on the longitudinal axis and being of a pitch such that a cutting edge having substantially the same positive rake angle is formed for each of the variety of sizes of the bore.

In another advantageous arrangement, each shaped cavity has an edge in the said at least one plane made up of a plurality of linear portions such that a cutting edge having a positive rake angle between about 5° and 15°, preferably between about 10° and 11° is formed for each of the variety of sizes of the bore. Advantageously in the case of this latter arrangement, the shaped cavity has two edges in the said at least one plane each made up of a plurality of linear portions, such that a cutting edge having a positive rake angle between about 5° and 15°, preferably between about 10° and 11° is formed for each of the variety of sizes of the bore and for both possible directions of rotation of the die blank about its longitudinal axis.

In some cases, each shaped cavity can conveniently have the same transverse cross-section throughout the length of the blank.

Alternatively, where each shaped cavity is not symmetrical about a plane radial with respect to the longitudinal axis of the die blank, the shape and configuration of each shaped cavity can be such that as viewed from one end of the blank in the longitudinal direction the shape of the shaped cavity at the said at least one plane is the same as the shape of the shaped cavity at a second transverse plane as viewed from the other end of the blank in the longitudinal direction. The cross-section of each shaped cavity can be varied smoothly from the said at least one to the second transverse plane — e.g. by linking corresponding points at each respective section by straight lines. Alternatively, the change of section might be achieved by having two zones of constant transverse cross-section with a rapid or abrupt change of section between these zones, preferably mid-way between the said at least one and second transverse planes. Preferably the said at least one and the second transverse planes are at opposite longitudinal end faces of the die blank.

One very convenient method of making a screwing die blank in accordance with the invention is investment casting.

The invention also resides in a screwing die comprising a blank in accordance with the invention having a threaded bore formed on the said longitudinal axis and extending through the blank.

The invention will now be described by way of example only with reference to the accompanying drawings, of which

Figure 1 shows a screwing die blank in accordance with the invention;

Figure 2 shows a screwing die made from the blank shown in Figure 1;

Figure 3 shows a different form of screwing die blank in accordance with the invention; and

Figure 4 shows a still further form of screwing die blank in accordance with the invention.

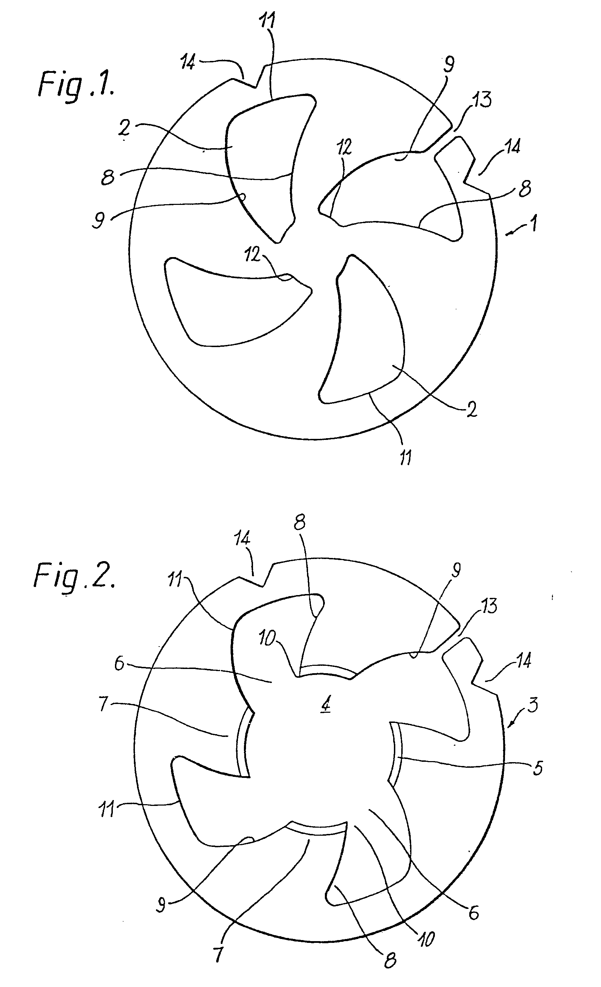

As shown in Figure 1, a screwing die blank 1 is of cylindrical form, and is provided with four shaped cavities 2, which extend through the blank from end to end, parallel with, and symmetrically disposed around its longitudinal axis. It is intended that the blank should be used to form a die 3 (Figure 2) having a bore 4 centred on its longitudinal axis, the bore 4 having a screw thread 5 formed on its surface. As will be apparent from Figure 2, the minimum sized threaded bore 4 for which the blank 1 is designed overlaps the shaped cavities 2, and hence communicates therewith through openings 6 which extend the full axial length of the bore 4.

Between the openings 6 there remain lands 7 upon which the thread 5 is formed. The die 3 is intended to cut a screw thread on a male screw blank inserted from the upper end when the die is rotated in an anti-clockwise direction as viewed in the Figures.

The shaped cavities 2 are each of similar constant cross-section, when viewed in section transverse to the longitudinal axis of the blank. Each shaped cavity 2 has a curved rearward side 8 which forms, with the surface of the bore 4, a cutting edge 10 having an acute rake angle of about 10 to 11° for all bore diameters within the intended range. Such a curve is in fact an Archimedes spiral having its origin at the cylinder axis and is so referred to herein. Each shaped bore 2 has also, when so viewed, a curved forward side 9, which is shaped so as to provide for all diameters of threaded bore 5 which the die blank 1 can accommodate, the best compromise between the dimension of the lands 7 and the openings 6. This compromise has been determined empirically for various screw thread diameters to be cut, and will generally be such as to provide a land area of about 35 to 45% of the threaded bore circumference for all bore sizes which can be accommodated. The forward sides 9 in this instance are thus also in the form of an Archimedes spiral of the same form as the sides 8, but displaced circumferentially therefrom sufficiently to provide a constant percentage land area. The outer side 11 and the inner side 12 of each of the shaped cavities 2 is in the form of an arc centred on the longitudinal axis of the blank, but the shape of the outer and inner sides is not critical.

A small slit 13 is formed along the axial length of the die extending from one of the shaped bores 2 to the exterior of the die blank 1. This imparts some degree of resilience to the finished die 3 in the circumferential direction, which is a desirable characteristic in use, as is known. The die blank 1 is also provided with a pair of notches 14 in its exterior surface, by means of which the finished die may be held for rotation by a conventional die holder.

In order to form a finished die such as 3 from the die blank 1, it is necessary only to form a bore 4 of appropriate diameter on the longitudinal axis thereof, and to provide a screw thread 5 of desired form on the land portions 7. The blank 1 is intended to accommodate a range of sizes of threaded bore 4, the limits of the range being fixed by the diameter of the inner surface 12, and by the need to leave a sufficient clearance between the workpiece and the outer surface 11 for the disposal of metal cut away when forming a thread. The blank itself can conveniently be formed by investment casting. In most instances the die blank material will be hard in order to produce a durable cutting edge 10. It will be apparent that the invention permits the production of a die from the blank material with a minimum of machining, thus effecting an appreciable saving both in terms of machining effort and material.

The accuracy of the rake angle at the cutting edge 10 is an important matter for the efficient cutting of screw threads by means of a die, and the present invention enables the provision of a die in which the rake angle can be accurately controlled. The value of the optimum rake angle does not normally vary with screw thread diameter, hence the curved rearward side 10 in the form of an Archimedes spiral can provide the optimum rake angle for all intended thread diameters. In the known design of die described above the accurate control of rake angle tends to be critically dependent upon accurate positioning of the plurality of circular holes drilled parallel to the threaded bore and is thus more open to inaccuracy than with a die formed from a cast blank in accordance with the invention.

The embodiment described with reference to Figures 1 and 2 is suitable for use only one way up, i.e. if a right hand thread is formed on the bore 4, the male blank on which a thread is to be formed must enter from the upper face of the die as viewed in Figures 1 and 2. If the blank enters the die from the other (lower) face, clockwise rotation of the die necessary to "screw" the die along the workpiece will move the cutting edges 10 in the wrong sense for the removal of metal, i.e. the cutting edges will form the trailing, not the leading sides of the lands 7.

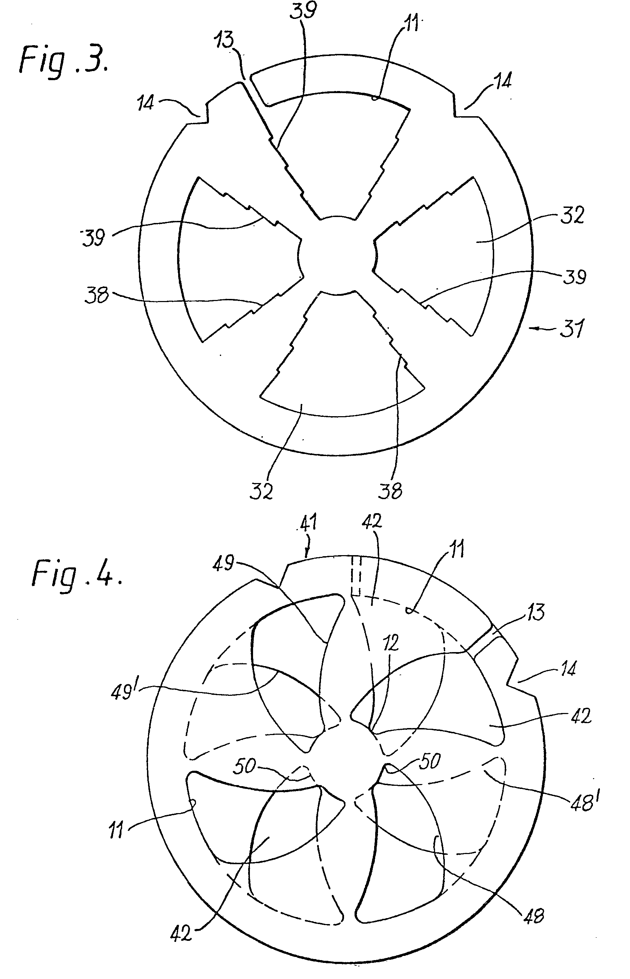

There is a requirement for a die which is reversible, i.e. is suitable for use from both end faces, and the die blanks shown in Figures 3 and 4 are intended to meet this requirement whilst still being suitable for forming a range of die sizes. In Figures 3 and 4, those parts which are similar to parts shown in Figure 1 are given like reference numbers, and repetition of description is avoided.

Referring to Figure 3 the die blank 31 shown therein also has four mutually similar shaped cavities 32 extending longitudinally therethrough parallel to the longitudinal axis and symmetrically disposed with respect thereto. The shaped cavities 32 of the Figure 3 embodiment are, however, of a different shape from the shape cavities 2 of the Figure 1 embodiment. Specifically, the cavities 32 are of stepped form, having stepped sides 38 and 39 corresponding to the curved sides 8 and 9 of the Figure 1 embodiment, while the inner and outer bounding sides 12 and 11 are of arcuate form as in Figure 1. Each of the stepped sides 38, 39 is made up of a number (in this case four) of planar portions or "steps", each inclined at an angle of about 10—11° to at least one, and preferably all radial planes which intersect that portion.

The cavities 32 are of constant cross-section transverse to the longitudinal axis.

It is intended that as with the Figure 1 embodiment a die for cutting a thread on a male screw blank should be formed from the die blank 31 by simply forming a threaded bore (not shown) on the longitudinal axis of the blank. The discontinuities between the steps are so dimensioned as to ensure that at each intended size of threaded bore the openings formed between each shaped cavity 32 and the bore account for between 55% and 65% of the bore circumference, and the lands which separate the openings thus account for the remaining 35 to 45%.

It will be seen that from a single blank of this form it is possible to produce dies for a range of thread diameters. Furthermore this blank has the advantage over that shown in Figure 1 that it is suitable for the formation of a die for cutting a right or a left-hand thread, and that the male screw blank may be introduced to the die from either end, i.e. the die is reversible. This arises because of the stepped design of the forward and rearward sides 38 and 39. For example, if the blank shown in Figure 3 is made into a die for forming a right-hand thread, then if the male screw blank is introduced into the lower side of the die as viewed in Figure 3, the die needs to be turned clockwise to form the thread, and the cutting edges are those formed where the sides 38 meet the threaded bore (not shown). If the screw blank is introduced from the upper side (Figure 3), then the die needs to be turned counter-clockwise to cut the threads, and the cutting edges are those formed where the sides 39 meet the threaded bore. In either event, the cutting edges have the correct positive rake angle of about 10 to 11° for a variety of intended bore sizes, because of the slope of the stepped planar portions of the sides 38, 39. The stepped arrangement permits a design in which the correct land proportions are also maintained through the intended range of bore sizes.

With the Figure 3 arrangements, two die blanks are needed to provide for the whole of a range of thread diameters, because it is necessary to avoid bores just smaller than the discontinuities between the steps. Where only a range of standard, discrete sizes is required, it may be possible to provide a single blank suitable for all such sizes, but where a capability for all sizes throughout a particular range is required, the need for two different blanks can be a disadvantage. It may also be noted that for only one single thread diameter within each step is it possible to provide a combination of optimum rake angle and land area — although a close to optimum combination can be achieved throughout each step.

The cylindrical die blank 41 shown in Figure 4 embodies a still further configuration of shaped cavities, which again is designed to permit production of a range of reversible dies for cutting a range of thread diameters. The embodiment shown in Figure 4 is for the formation of dies for cutting right-hand screw threads only, but it will be apparent from the following description that a similar embodiment can be made for left-hand threads.

The die blank 41 has four shaped cavities 42 extending therethrough from top to bottom in the direction of its longitudinal axis and disposed symmetrically with respect thereto. Each cavity 42 has an outer bounding surface 11 and an inner bounding surface 12, both being in the form of an arc centred on the longitudinal axis of the blank. Each shaped cavity is also bounded by sides having a complex shape, and extending in a generally radial direction. In order to appreciate the reasons for the shaping of these sides, it is necessary to recall that the blank is intended to receive a threaded bore centred on its longitudinal axis, and cutting edges for cutting a thread on a male screw blank are formed where the shaped cavities meet this bore. As shown in Figure 4 the die thus formed needs to be rotated anticlockwise to cut a (right-hand) screw thread on a male screw blank introduced from the top, and clockwise if introduced from the bottom.

At the top surface of the die blank 41, each shaped cavity 42 has curved edges 48 and 49 and the shaping of these edges corresponds exactly to that of the respective sides 8, 9 as viewed in plan from above in Figure 1. At the lower surface of the die blank 41, each shaped cavity has curbed edges 48$^1$, and 49$^1$ whose shape again corresponds exactly to the respective sides 8, 9 but as viewed in plan from below. Thus as shown in Figure 4, the cross-section of the cavities 42 at the upper surface of the die blank 41 is the mirror image of that at the lower surface — when both cross-sections are viewed from above as in Figure 4.

It will thus be appreciated that when the blank 41 is converted into a die by the formation of an axial bore therethrough in the manner already described, the die will have a cutting edge formed with the correct rake angle at its upper face where the edge 48 meets the central bore, for cutting a screw thread on a blank which enters from that face, and at its lower face where the edge 49$^1$ meets the bore for cutting a screw thread on a blank entering from the lower face. The correct proportion of land to opening will be maintained as noted above with reference to Figures 1 and 2.

Between the upper and lower faces of the die blank, each shaped cavity can be formed by joining the upper and lower faces through straight lines linking points on a common radius (i.e. points on edge 48 to points on edge 48$^1$, points on edge 49 to points on edge 49$^1$). The inner and outer surfaces 12, 11 will of course conveniently be part-cylindrical as with the other described embodiments. Alternatively, the shaped cavity can have some other form which smoothly merges the upper cross-section into the lower.

As a still further alternative, the shaped cavities 42 might each have between sides 11 and 12, the cross-section defined by edges 48 and 49 for the upper half of their depth, and that defined by edges 48$^1$ and 49$^1$ for the lower half, with a rapid or abrupt transition from one cross-section to the other at some point in between, e.g. at the mid-plane.

## Claims

1. A blank for a screwing die having a longitudinal axis on which is to be formed a bore (4), having a screwcutting thread (5) on its surface, and one or more shaped cavities (2; 32; 42) extending through the blank in a generally longitudinal sense, the shape and disposition of the shaped cavities (2; 32; 42) being such that for each of a range of sizes of the bore one or more openings (6) are formed through which the bore communicates with the remainder of the said one or more shaped cavities, said remainder being flanked by one or more land portions (7) of the blank which carry the screw-cutting threads (5), characterised in that the shaped cavities are of non circular form such that over a substantial proportion of the said range
   i. in at least one plane transverse to the longitudinal axis, a cutting edge (10) having a positive rake angle of between about 5° and 15° is formed on the leading edge of each land portion, and
   ii. in the said at least one plane the land portions (7) form in total between about 30 and 45% of the bore circumference with the said openings (6) forming the remainder of the circumference.

2. A blank for a screwing die according to claim 1 characterised in that the said at least one plane is that of an end face of the die blank.

3. A blank for screwing die according to claim 1 or claim 2 characterised in that the said positive rake angle is between about 10° and 11°.

4. A blank for a screwing die according to any one of claims 1 to 3 characterised in that the said at least one plane the land portions form in total between about 35 and 45% of the bore circumference.

5. A blank for a screwing die according to any one of the claims 1 to 4 characterised by a plurality of the said shaped cavities (2; 32; 42) which are mutually separate.

6. A blank for a screwing die according to claim 5 characterised in that the said shaped cavities (2; 32; 42) are of similar form.

7. A blank for a screwing die according to claim 5 or claim 6 characterised in that the said shaped cavities (2; 32; 42) are symmetrically disposed with reference to the longitudinal axis.

8. A blank for a screwing die according to any one preceding claim characterised in that each shaped cavity (2; 42) has an edge (8; 48; 49) in the said at least one plane in the form of an Archimedes spiral having its origin on the longitudinal axis and being of a pitch such that a cutting edge (10) having substantially the same positive rake angle is formed for each of the variety of sizes of the bore (4).

9. A blank for a screwing die according to any one of claims 1 to 7 characterised in that each shaped cavity (32) has an edge (38; 39) in the said at least one plane made up of a plurality of linear portions, such that a cutting edge (10) having the said positive rake angle is formed for each of the variety of sizes of the bore.

10. A blank for a screwing die according to any one of claims 1 to 7 characterised in that each shaped cavity (32) has two edges (38, 39) in the said at least one plane each made up of a plurality of linear portions, such that a cutting edge (10) having the said positive rake angle is formed for each of the variety of sizes of the bore and for both possible directions of rotation of the die blank about its longitudinal axis.

11. A blank for a screwing die according to any one preceding claim characterised in that each shaped cavity (2; 32) is of the same transverse cross-section throughout the length of the blank.

12. A blank for a screwing die according to any one of claims 1 to 7 characterised in that the shape of each cavity (42) is such that as viewed from one end of the blank in the longitudinal direction the shape of the shaped cavity at the said at least one plane is the same as the shape of the shaped cavity at a second transverse plane as viewed from the other end of the blank in the longitudinal direction.

13. A blank for a screwing die according to claim 12 characterised in that the cross-section of each shaped cavity (42) is varied smoothly from the said at least one to the second transverse plane.

14. A blank for a screwing die according to claim 12 characterised in that there are two zones of constant transverse cross-section with an abrupt change of section between the said zones.

15. A blank for a screwing die according to claim 14 characterised in that the abrupt change of section is mid way between the said at least one and second transverse planes.

16. A blank for a screwing die according to any one of claims 12—15 characterised in that the said at least one and second transverse planes are at opposite longitudinal end faces of the die blank.

17. A blank for a screwing die according to any one preceding claim characterised in that it is formed by investment casting.

18. A screwing die characterised in that it is formed from a blank according to any one preceding claim having a threaded bore formed on the said longitudinal axis and extending through the blank.

**Revendications**

1. Ebauche pour outil matrice à tarauder ayant un axe longtitudinal le long duquel doit être pratiqué un alésage (4), portant, sur la surface d'alésage, un filetage (5) destiné à tarauder et comportant une ou plusieurs formes creuses (2; 32; 42) s'étendant à travers l'ébauche à peu près parallèlement à l'axe, la forme et la disposition de ces formes creuses (2; 32; 42) étant telles que pour chaque gamme de dimensions de l'alésage il se forme un ou plusieurs 'jours' (6) par lesquels l'alésage communique avec la partie restante desdites une ou plusieurs formes creuses, ces jours étant bordés par un ou plusieurs champs (7) de l'ébauche, qui comporteront les filets de taraudage (5), et est caractérisée par le fait que lesdites formes creuses sont de forme non circulaire et telles que pour une proportion importante de ladite gamme de dimensions d'alésage:

1) Dans au moins un plan perpendiculaire à l'axe longitudinal, un bord de coupe (10) ayant un angle d'inclinaison positive situé entre à peu près 5° et 15° se forme sur le bord d'attaque de chaque champ, et,

2) Dans lesdits au moins un plans de coupe perpendiculaires les éléments de champ (7) forment ensemble et au total entre à peu près 30 et 40% de la circonférence de l'alésage, lesdits jours (6) constituant le reste de la circonférence.

2. Une èbauche pour outil matrice de taraudage selon la revendication No. 1 et caractérisée par le fait que l'un desdits, au moins un, plans perpendiculaires est celui d'une des faces d'extrémité de l'ébauche.

3. Une ébauche pour outil matrice de taraudage selon la revendication 1 ou la revendication 2 caractérisée par le fait que ledit angle d'inclinaison positif se situe entre 10° et 11°.

4. Une ébauche pour outil matrice de taraudage selon l'une quelconque des revendications 1 à 3 caractérisée par le fait que dans lesdits au moins un plans perpendiculaires les portions de circonférence représentant des champs forment au total entre à peu prés 35 et 45% de la circonférence d'alésage.

5. Une ébauche pour outil matrice de taraudage selon l'une quelconque des revendications 1 à 4 caractérisée par le fait qu'il existe plusieurs desdites formes creuses (2; 32; 42) séparées les unes des autres.

6. Une ébauche pour outil matrice de taraudage selon la revendication 5 caractérisée par le fait que lesdites formes creuses (2; 32; 42) sont de forme similaire.

7. Une ébauche pour outil matrice de taraudage selon la revendication 5 ou la revendication 6 caractérisée par le fait que lesdites formes creuses (2; 32; 42) sont réparties symétriquement autour de l'axe longitudinal.

8. Une ébauche pour outil matrice de taraudage selon l'une quelconque des revendications qui précèdent caractérisée par le fait que chaque forme creuse (2; 42) est munie d'un bord (8; 48; 49) situé dans lesdits au moins un plans perpendiculaires, ayant la forme d'une spirale d'Archimède dont l'origine se trouve sur l'axe longitudinal de l'ébauche et dont le pas est tel qu'un bord de coupe se trouve formé (10) ayant à peu près le même angle d'inclinaison positif pour les différents diamètres d'alésage pratiqués (4).

9. Une ébauche pour outil matrice de taraudage selon l'une quelconque des revendications 1 à 7 caractérisée par le fait que chaque forme creuse (32) comprend un bord (38; 39) situé dans lesdits au moins un plans perpendiculaires, constitué par un nombre de segments linéaires, tels qu'un bord de coupe (10) ayant ledit angle d'inclinaison positif se forme pour chacun des diamètres d'alésage pratiqués.

10. Une ébauche pour outil matrice de taraudage selon l'une quelconque des revendications 1 à 7 caractérisée par le fait que chaque forme creuse (32) possède deux bords (38 et 39) situés dans lesdits au moins un plan perpendiculaires, constituées chacun par plusieurs sections linéaires, telles qu'un bord de coupe (10) avant ledit angle d'inclinaison positif se forme pour chacun desdits diamètres d'alésage pratiqués et pour chacun des deux sens de rotation qu'il est possible de faire subir à l'ébauche autour de son axe longitudinal.

11. Une ébauche pour outil matrice de taraudage selon l'une quelconque des revendications qui précède caractérisée par le fait que chaque forme creuse (2; 32) aura la même section dans les plans perpendiculaires à l'axe sur toute la longueur de l'ébauche.

12. Une ébauche pour outil matrice de taraudage selon l'une quelconque des revendications 1 à 7 caractérisée par le fait que chaque forme creuse (42) est telle que sa section selon un plan perpendiculaire vue par une extrémité selon l'axe longitudinal est identique à cette même section vue selon l'axe longitudinal par l'autre extrémité.

13. Une ébauche pour outil matrice de taraudage selon la revendication 12 caractérisée par le fait que la section transversale de chaque forme creuse (42) varie régulièrement entre lesdits au moins un plans perpendiculaires et un second plan perpendiculaire.

14. Une ébauche pour outil matrice de taraudage selon la revendication 12 caractérisée par le fait qu'il existe deux zones de sections perpendiculaires à l'axe de forme constante, avec changement brusque de section entre les deux zones.

15. Une ébauche pour outil matrice de taraudage selon la revendication 14 caractérisée par le fait que le brusque changement de section se situe à mi-chemin entre ledit au moins un plan perpendiculaire et un second plan perpendiculaire.

16. Une ébauche pour outil matrice de taraudage selon l'une quelconque des revendications 12 à 15 caractérisée par le fait que lesdits au moins un et le second plans perpendiculaires sont situés aux faces opposées de l'ébauche selon l'axe Longitudinal.

17. Une ébauche pour outil matrice de taraudage selon l'une quelconque des revendications qui précèdent caractérisée par le fait qu'elle a été réaliée par coulée en modèle perdu.

18. Une outil matrice de taraudage caractérisé par le fait qu'il a été réalisé à partir d'une ébauche selon l'une quelconque des revendications qui précèdent, possédant un alésage fileté selon ledit axe longitudinal selon la longueur de l'ébauche.

**Patentansprüche**

1. Rohling für ein Gewindeschneideisen mit einer Längsachse, entlang welcher eine Bohrung (4) gebildet ist, deren Oberfläche mit einem gewindeschneidenden Schraubgewinde (5) und einer bzw. mehreren geformten Ausnehmung bzw. Ausnehmungen (2; 32; 42) versehen ist, welche sich wesentlich in Längsrichtung durch den Rohling erstrecken, wobei die geformten Ausnehmungen (2; 32; 42) derart geformt und angeordnet sind, daß für je einen Größenbereich der Bohrung eine bzw. mehrere Öffnung bzw. Öffnungen (6) gebildet ist bzw. sind, durch welche die Bohrung mit dem Rest der Ausnehmung bzw. Ausnehmungen in Verbindung steht, wobei seitlich des besagten Rests ein bzw. mehrere Fasenteil bzw. Fasenteile (7) des Rohlings vorgesehen ist bzw. sind, der bzw. die die gewindeschneidenden Schraubgewinde (5) trägt bzw. tragen, dadurch gekennzeichnet, daß die geformten Ausnehmungen nicht kreisförmig ausgebildet sind, so daß über einen wesentlichen Teil des besagten Bereiches

i. eine Schneidkante (10) mit einem positiven Spanwinkel von 5 bis 15° an der voreilenden Kante des Fasenteils in mindestens einer, zur Längsachse senkrecht verlaufenden, Ebene gebildet ist,

ii. in der mindestens einen besagten Ebene, die Fasenteile (7) insgesamt zwischen 30 und 45% des Bohrungsumfangs bilden, wobei die besagten Öffnungen (6) den restlichen Umfang bilden.

2. Rohling für ein Gewindeschneideisen nach Anspruch 1, dadurch gekennzeichnet, daß die besagte mindestens eine Ebene die einer Stirnfläche des Schneideisenrohlings ist.

3. Rohling für ein Gewindeschneideisen nach Anspruch 1 oder 2, dadurch gekennzeichnet, daß der positive Spanwinkel einen Wert zwischen 10 und 11° hat.

4. Rohling für ein Gewindeschneideisen nach einem der Ansprüche 1 bis 3, dadurch gekenn-zeichnet, daß die Fasenteile der wenigstens einen Ebene insgesamt zwischen 35 und 45% des Bohrungsumfangs ausmachen.

5. Rohling für ein Gewindeschneideisen nach einem der Ansprüche 1 bis 4, gekennzeichnet durch eine Mehrzahl der besagten, geformten Ausnehmungen (2; 32; 42), die gegenseitig getrent sind.

6. Rohling für ein Gewindeschneideisen nach Anspruch 5, dadurch gekennzeichnet, daß die besagten geformten Ausnehmungen (2; 32; 42) ähnlich ausgebildet sind.

7. Rohling für ein Gewindeschneideisen nach Anspruch 5 oder 6, dadurch gekennzeichnet, daß die besagten, geformten Ausnehmungen (2; 32; 42) mit Bezug auf die Längsachse symmetrisch angeordnet sind.

8. Rohling für ein Gewindeschneideisen nach einem der vorhergehenden Ansprüche, dadurch gekennzeichnet, daß jede geformte Ausnehmung (2; 42) in der besagten, wenigstens einen Ebene eine als archimedische Spirale ausgebildete Kante (8; 48; 49) aufweist, die von der Längsachse ausgeht und eine derartige Steigung hat, daß eine Schneidkante (10) mit im wesentlichen dem gleichen positiven Spanwinkel für jede einer Anzahl verschiedener Größen der Bohrung (4) gebildet wird.

9. Rohling für ein Gewindeschneideisen nach einem der Ansprüche 1 bis 7, dadurch gekennzeichnet, daß jede geformte Ausnehmung (32) in der besagten, wenigstens einen Ebene eine aus einer Mehrzahl linearer Teile bestehende Kante (38; 39) aufweist, so daß eine Schneidkante (10) mit dem besagten positiven Spanwinkel für jede einer Anzahl verschiedener Größen der Bohrungen gebildet wird.

10. Rohling für ein Gewindeschneideisen nach einem der Ansprüche 1 bis 7, dadurch gekennzeichnet, daß in der besagten, wenigstens einen Ebene, jede geformte Ausnehmung (32) zwei Kanten (38; 39) aufweist, die je aus einer Mehrzahl linearer Teile bestehen, so daß eine Schneidkante (10) mit dem besagten positiven Spanwinkel für jede einer Anzahl verschiedener Größen der Bohrungen gebildet wird, und zwar für beide möglichen Drehrichtungen des Schneideisenrohlings um seine Längsachse.

11. Rohling für ein Gewindeschneideisen nach einem der vorhergehenden Ansprüche, dadurch gekennzeichnet, daß jede geformte Ausnehmung (2; 32) den gleichen, sich quer durch die Länge des Rohlings erstreckenden Querschnitt aufweist.

12. Rohling für ein Gewindeschneideisen nach einem der Ansprüche 1 bis 7, dadurch gekennzeichnet, daß bei Sicht von einem Ende des Rohlings in der Längsrichtung jede Ausnehmung (42) derart ausgebildet ist, daß die Form der geformten Ausnehmung an der besagten, mindestens einen Ebene gleich der Form der geformten Ausnehmung an einer zweiten sich quer erstreckenden Ebene ist, bei Sicht vom anderen Ende des Rohlings in Längsrichtung.

13. Rohling für ein Gewindeschneideisen nach Anspruch 12, dadurch gekennzeichnet, daß der Querschnitt jeder geformten Ausnehmung (42) allmählich von der besagten, mindestens einen zur zweiten, sich quer erstreckenden Ebene übergeht.

14. Rohling für ein Gewindeschneideisen nach Anspruch 12, dadurch gekennzeichnet, daß zwei Bereiche konstanten, sich quer erstreckenden Querschnitts vorgesehen sind, mit einer schroffen Profiländerung zwischen den besagten Bereichen.

15. Rohling für ein Gewindeschneideisen nach Anspruch 4, dadurch gekennzeichnet, daß die schroffe Profiländerung sich in der Mitte zwischen der besagten, mindestens einen und der zweiten, sich quer erstreckenden Ebene befindet.

16. Rohling für ein Gewindeschneideisen nach einem der Ansprüche 12 bis 15, dadurch gekennzeichnet, daß die besagten, mindestens eine und zweite sich quer erstreckenden Ebenen an sich gegenüberliegend befindlichen längsgerichteten Stirnflächen des Schneideisenrohlings befinden.

17. Rohling für ein Gewindeschneideisen nach einem der vorhergehenden Ansprüche, dadurch gekennzeichnet, daß er durch verlorenen Guß gebildet wird.

18. Ein Gewindeschneideisen, dadurch gekennzeichnet, daß es aus einem Rohling entsprechend eines der vorhergehenden Ansprüche gebildet wird, mit einer entlang der besagten Längsachse gebildeten und sich durch den Rohling erstreckenden gewindeaufweisenden Bohrung.

Fig.1.

Fig.2.

Fig .3.

Fig .4.

2